# EUROPÄISCHE PATENTANMELDUNG

(11) **EP 0 566 547 A1**
(43) Veröffentlichungstag der Anmeldung: **20.10.1993**
(21) Anmeldenummer: 93850037.8
(22) Anmeldetag: 26.02.1993
(51) Int. Cl.: B25B 29/02, B23P 19/06

(54) **Verfahren zum Vorspannen von Gehäusebolzen sowie Vorrichtung zur Durchführung des Verfahrens**

(30) Priorität: 15.04.1992 SE 9201198
(71) Anmelder: OVAKO COUPLINGS AB, S-813 82 Hofors (SE)
(72) Erfinder: Sundberg, Staffan, S-813 00 Hofors (SE); Odsberg, Hans, S-183 46 Täby (SE)
(74) Vertreter: Karlsson, Leif Karl Gunnar

(57) **Zusammenfassung**

Ein Verfahren zum Vorspannen von an Stellen seitlich begrenzter Zugänglichkeit angeordneten Bolzen, insbesonders von Gehäuseabdeckungsbolzen für Turbinen, umfasst die Montage eines Brückenelements (41) auf den Endflächen der mit Gewinde versehenen Enden von an entgegengesetzen Seiten des zu spannenden Bolzens (22) angeordneten Stützbolzen (21, 23) sowie das Vorspannen des Bolzens (22) mittels eines am Brückenelement (41) angebrachten hydraulischen Spannorgan (42, 45). Eine Vorrichtung zur Durchführung des erfindungsgemässen Verfahrens umfasst ein Brückenelement (41), eine am Brückenelement angebrachte Spannhülse (42) mit hydraulischem Zylinder (45) sowie Mittel zur Erzeugung von hydraulischem Druck.

## Beschreibung

Die Erfindung betrifft ein Verfahren zum Vorspannen von an Stellen mit beschränkter seitlicher Zugänglichkeit gruppenweise und parallel zueinander angeordneten Bolzen , insbesonders Gehäusebolzen für Dampf- und Gasturbinen und für Ventile für derartige Turbinen, sowie eine Vorrichtung zur Durchführung des Verfahrens.

Die bei Gas- und Dampfturbinen verwendeten Gehäuseabdeckungen sind gross und schwer und müssen gasdicht gegeneinander befestigt werden. Dies geschieht mittels einer Anzahl von Zugbolzen, die in Abständen voneinander im Kreis oder in einer anderen, der geometrischen Form der Gehäuseabdeckung an deren Peripherie angepassten, Form angeordnet sind, und die mit beträchtlicher Kraft vorgespannt werden. Im Laufe der Jahre hat man nach und nach die Vorspannung erhöht, mit dem Ziel, den Dampf-bzw. Gasdruck in den Turbinen zu erhöhen, um deren Leistung zu verbessern.

Verschiedene Verfahren zur Vorspannung derartigen Bolzen sind bekannt. Bei der heute häufigsten Methode werden sogenannte Wärmebolzen verwendet, d. h. Bolzen, die vorerst erwärmt und in heissem Zustand mechanisch gedehnt werden. Der Zeitaufwand für die Erwärmung und Abkühlung der Bolzen ist beträchtlich. Die Montage einer Gehäuseabdeckung für eine grosse Gas- oder Dampfturbine nimmt deshalb mehrere Tage in Anspruch.

Zur Feststellung ob die richtige Vorspannung ersielt wurde, muss eine Abkühlung der Bolzen abgewarten werden. Falls die gewünschte Vorspannung hierbei nicht erzielt wurde, muss der Erwärmungs- und Abkühlungsvorgang wiederholt werden, was den Zeitaufwand weiter erhöht.

Beim Vorspannen und Festschrauben von Bolzen an Gehäuseabdeckungen von Turbinen u. dgl. entstehen Spannungen in der Abdeckung selbst, die auch nach Montage sämtlicher Bolzen bestehen bleiben. Beim mechanischen Vorspannen von Bolzen können Spannungen in den Gehäuseabdeckungen von Turbinen u. dgl. dadurch vermindert werden, dass im Verhältnis zum Mittelpunkt derAbdeckung symmetrisch angeordnete Bolzen gleichzeitig oder in kleinen Schritten gespannt werden, wobei die Vorspannung für jeden der Bolzen in wesentlich gleichem Masse wesentlich gleichzeitig erhöht wird. Ein solches Vorgehen ist bei Verwendung des Wärmespannungsverfahrens nicht möglich, was notwendigerweise zu einem schlechteren Vorspannungsergebnis führt.

Reparatur- und Wartungsarbeiten an grossen Turbinen haben zur Folge, dass diese ausser Betrieb gesetzt werden müssen, was oft sehr teuer ist. Ein Verkürzung der für die Reparatur oder Wartung in Anspruch genommenen Zeit ist u.a. aus diesem Grund erstrebenswert.

Seit langem ist bekannt, Bolzen hydraulisch vorzuspannen. Das hydraulische Vorspannungsverfahren ist wesentlich schneller und auch leichter reproduzierbar als eine Vorspannung durch Erwärmen, konnte jedoch für Bolzen an Verschlusskappen von Turbinen u. dgl. verwendet werden, da diese nicht den erforderlichen Platz zum Anbringen der hierzu benötigten Werkzeuge aufweisen.

Zweck vorliegender Erfindung ist die Schaffung eines schnelleren und leichter reproduzierbaren Verfahrens, um Bolzen der eingangs erwähnten Art an Stellen vorzuspannen. wo kein Platz für das Anbringen der benötigten Werkzeuge auf herkömmliche Weise vorhanden ist.

Zur Lösung dieser Aufgabe wird erfindungsgemäss bei einem eingangs beschriebenen Verfahren vorgeschlagen, ein Brückenelement auf den mit Gewinde versehenen Enden zweier oder mehrerer Stützbolzen anzuordnen, wobei die Stützbolzen an entgegengesetzen Seiten des vorzuspannenden Bolzens angeordnet sind, und das Vorspannen des Bolzens mittels eines am Brückenelement angebrachten hydraulischen Spannelements vorgenommen wird.

Es ist bevorzugt, in einer entlang einer Geraden oder einer Kurve angeordneten Reihe von Bohrungen, beispielsweise Bohrungen in einer Gehäuseabdeckung einer Dampf- oder Gasturbine oder an einem Absperr-oder Regelventil einer solchen Turbine, Bolzen zu montieren und, während diese sich unter Vorspannung befinden, durch Festschrauben von Muttern zu sichern, wobei zumindestens einer der Bolzen, welcher als Arbeitsbolzen bezeichnet wird, hydraulisch gedehnt und in gedehntem Zustand lagesfixiert wird.

Bevorzugt ist ausserdem eine Ausführungsform des erfindungsgemässen Verfahrens die folgende Massnahmen umfasst:
a) Auswählen einer Bolzenbohrung zum Anbringen des Arbeitsbolzens in dieser,
b) Anbringen des Arbeitsbolzens in der Bolzenbohrung durch festschrauben und Anziehen des Arbeitsbolzens mittels einer Mutter,
c) Einführen eines Stützbolzens in einer an einen Seite des Arbeitsbolzens gelegenen Bohrung und eines anderen Stützbolzens in einer an der anderen Seite des Arbeitsbolzens gelegener Bohrung, das Festschrauben und Anziehen der Stützbolzen mittel Muttern, wobei die freien Endflächen der Stützbolzen vorzugsweise plan ausgebildet sind,
d) Aufsetzen eines Brückenelements auf die Stützbolzen , wobei das Brückenelement zumindestens eine durchgehende Öffnung hat und mit seiner einen Seite gegen die freien planen Enden der Stützbolsen anliegt und sich auf diese abstützt, und wobei das Brückenelement in seiner Lage so ausgerichtet wird, dass dessen durchgehende Öffnung eine Position über den Arbeitsbolzen einnimmt,
e) Einbringen einer Ziehhülse mit einem hydraulischen Zylinder in die Öffnung des Brückenelementes und Anschrauben der Ziehhülse am Arbeitsbolzen , wobei der hydraulische Zylinder zum Anliegen an das Brückenelement gebracht wird,
f) Aktivierung des hydraulischen Zylinders, wobei der hydraulische Zylinder durch die über die Ziehhülsen ausgeübte Kraftwirkung den Arbeitsbolzen bis zum Erreichen einer bestimmten Dehnung dehnt,
g) Lagesfixierung des Arbeitsbolzens im gedehnten Zustand durch Anziehen der Mutter, und
f) Deaktivierung des hydraulischen Zylinders, Lösen der Ziehhülse vom Bolzen und der Ziehhülse mit dem hydraulischen Zylinder vom Brückenelement, sowie Demontage des Brückenelements,

wobei die Massnahme c) auch der Massnahme b) vorausgehen kann.

Nach einer bevorzugten Ausführungsform der Erfindung werden bei der Montage des Brückenelements auf den Stützbolzen ein oder mehrere Zwischenkörper zwischen dem Brückenelement und einem oder mehreren Stützbolzen angeordnet.

Es ist weiters bevorzugt, bei der Montage des Brückenelements auf die Stützbolzen in der Stufe d) einen oder mehrere Zwischenkörper zwischen dem Brückenelement und dem oder den Stützbolzen anzubringen.

Weiterhin ist bevorzugt, dass ein und derselbe Bolzen sowohl Stützbolzen, falls ein benachbarter Bolzen vorgespannt werden soll, und Arbeitsbolzen sein kann. Es ist auch bevorzugt, dass ein Bolzen als Stützbolzen sowohl im vorgespannten als auch im nicht vorgespannten Zustand funktionieren kann.

Nach einerweiteren Ausbildung der Erfindung wird die Änderung der Vorspannung überwacht und die Vorspannung eines Bolzens der eingangs angegebenen Art durch hydraulischen Druck geregelt.

Es ist auch bevorzugt, zwei oder mehrere Bolzen an einer Turbinengehäuseabdeckung o. dgl. gleichzeitig zu spannen, vorzugsweise Bolzen mit einer im Verhältnis zum Mittelpunkt der Abdeckung symmetrischen Konfiguration, wodurch etwaige in der Abdeckung auftretende und gegebenenfalls nach der Montage verbleibende Spannungen vermindert werden.

Die Erfindung besieht sich auch auf eine Vorrichtung zur Durchführung des erfindungsgemässen Verfahrens. Die Vorrichtung umfasst ein Brückenelement aus Stahl oder ähnlichem Material, das mit einem oder mehreren durchgehenden, im Brückenelement angebrachten Öffnungen zur Aufnahme eines oder mehrerer Spannorgane versehen ist, wobei jedes Spannorgan eine Ziehhülse und ein hydraulisches Organ umfasst. Vorzugsweise wird die Vorrichtung zur Durchführung des erfindungsgemässen Verfahrens mit Zwischenkörpern, die zum Anbringen zwischen dem Brückenelement und einem oder mehereren Stützbolzen vorgesehen sind, versehen. Es ist bevorzugt, dass die Vorrichtung mit Mitteln zur Anzeige des hydraulischen Druckes versehen wird. Darüberhinaus ist es bevorzugt, dass die Mittel zur Anzeige des hydraulischen Druckes Regelmittel umfassen, wobei die Regelmittel den hydraulischen Druck so begrenzen, dass dieser maximal einen anfänglich eingestellten Wert betragen kann. In der Ausbildung des Brückenelements mit zwei oder mehreren durchgehenden Bohrungen sind die Abstände zwischen den Mittelpunkten dieser Bohrungen so angeordnet, dass sie mit den Abständen zwischen zwei oder mehreren, mittels dem Brückenelement und am Brück-enelement angeordneten Spannorganen zu spannenden, Bolzen übereinstimmen.

Die Erfindung wird nachstehend an Hand einer auf der beiligenden Zeichnung näher veranschaulichtes Ausführungsform einer erfindungsgemässen Vorrichtung näher beschrieben.
Fig. 1 ist eine schematische Ansicht einer bevorzugten erfindungsgemässen Ausführungsform von oben,
Fig. 2 ist ein Vertikalschnitt durch den in Fig. 1 gezeigten Gegenstand nach der Linie A - A und
Fig. 3 ist ein Vertikalschnitt durch den in Fig. 1 gezeigten Gegenstand in dessen Querrichtung (Schnitt B - B nach Fig. 1).

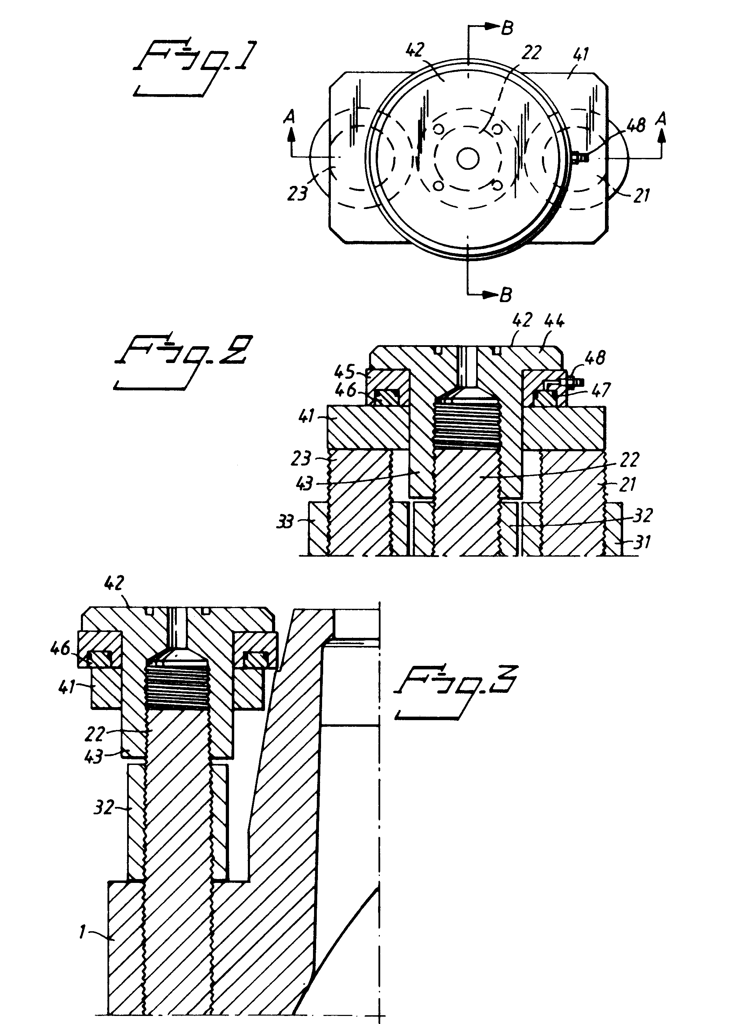

Eine Gehäuseabdeckung 1 einer Gasturbine ist an der Turbine mit Hilfe einerAnzahl paralleler Bolzen befestigt, von welchen nur drei mit Muttern 31, 32, 33 versehene Bolzen 21, 22, 23 in Fig. 2 in festgeschraubtem, jedoch ungedehntem Zustande gezeigt werden, und die Muttern 31, 32, 33 gegen die Gehäuseabdeckung 1 anliegen. Die Gehäuseabdeckung 1 und die Bolzen 21, 22, 23 werden nur in Teilansicht gezeigt.

Ein Brückenelement 41 von im wesentlichen rechteckiger und ebener Form, mit paralleler Ober- und Unterseite und teilweise abgeschrägten Kanten, stützt sich mit seiner Unterseite auf die flachen Endflächen der Stützbolzen 21 und 23 ab. Das Brückenelement 41 hat ein in der Oberseite und Unterseite zentrumsymmetrisch angebrachte, durchgehende Öffnung. Der Durchmesser dieser Öffnung ist etwas, aber nicht viel, grösser als der Aussendurchmesser eines Hülsenteils 43 einer im wesentlichen rotationssymmetrischen Ziehhülse 42, die mit einem Flansch 44 versehen ist. Das Hülsenteil 43 ist über den grösseren Teil seiner Längenausdehnung mit einem vom flanschfreien Ende ausgehenden Innengewinde versehen, wobei das Gewinde dimensionsmässig mit dem Aussengewinde des zu dehnenden Bolzens übereinstimmt.

Im Anschluss an und anliegend gegen den Flansch 44 wird das Hülsenteil 43 von einem im wesentlichen ringförmigen hydraulischen Element 45 umgeben, dessen Lumen etwas, aber nicht viel, grösser ist als der Aussendurchmesser des Hülsenteils 43. Der Hülsenteil 43 der Ziehhülse 42 wird in den Figuren in auf das Ende des Bolzens 22 geschraubtem Zustand gezeigt, wobei das hydraulische Element45 auch gegen das Brückenelement 41 anliegt. Das hydraulische Element 45 umfasst ein in einer ringförmigen Aussparung und in der Drehachse des hydraulischen Elements 54 beweglich angeordnetem ringförmigen Kolbenelement 46 mit gegen die Seitenwände der Aussparung dichtenden Dichtungen 47 und Hydraulfluid, das mit der der ringförmigen Aussparung zugewandten Seite des Kolbenelements 46 in Verbindung steht, sowie einer Leitungsverbindung zur Herstellung einer Hydraulfluidverbindung zwischen dem Kolbenelement und einem an der Seitenwand des hydraulischen Elements 45 angebrachten Anschlussteil 48. An das Anschlussteil 48 ist eine nicht gezeigte biegsame Druckleitung zur Zufuhr von Hydraulfluid von einem nicht gezeigten Kompressor für Hydraulfluid angeschlossen.

Bei einerZunahme des Druckes im Kompressor wird das hydraulische Element 45 aktiviert und in Richtung zum Kolbenelement 46, das an das Brückenelement anliegt, verschoben. Die Verschiebung des hydraulischen Elements 45 wird auf die Ziehhülse 42 und von dort auf den Bolzen 22 übertragen, der dabei gedehnt wird. Mit Hilfe eines nicht gezeigten, am Fluidkompressor angebrachten Druckmessinstruments wird der Druck abgelesen. Das Dehnen wird bei Erreichen eines vorbestimmten Wertes abgebrochen. Der Bolzen 22 wird in gedehntem Zustand durch Anziehen der Mutter 32 fixiert. Darauf wird ein nicht gezeigtes Druckausgleichsventil am Fluidkompressor geöffnet, wobei der Überdruck im hydraulischen System aufgehoben wird und die Vorrichtung leicht demontiert werden kann. Falls mehrere Bolzen gleichzeitig bis zur gleichen Vorspannung gespannt werden sollen, werden die hydraulischen Elemente vorzugsweise an ein und denselben Fluidkompressor angeschlossen; dadurch wird den Bolzen automatisch die gleiche Vorspannung erteilt.

## Patentansprüche

1. Verfahren zum Vorspannen von an Stellen mit beschränkter seitlicher Zugänglichkeit in Gruppen und parallel zueinander angeordneten Bolzen, insbesonders von Bolzen für Gehäuseabdeckungen von Dampf-und Gasturbinen und Ventilen für solche Turbinen, gekennzeichnet durch
- Anbringen eines Brückenelements (41) auf den Endflächen von mit Gewinde versehenen Enden zweier oder mehrerer Stützbolzen (21, 23), wobei die Stützbolzen (21,23) an entgegengesetzen Seiten des vorzuspannenden Bolzens (22) angeordnet sind, und
- Vorspannen dieses Bolzens (22) durch ein am Brückenelement (41) angebrachtes hydraulisches Spannelement (42, 45).

2. Verfahren nach Anspruch 1, wobei in einer entlang einer Geraden oder einer Kurve angeordneten Reihe von Bohrungen, beispielsweise Bohrungen in einer Gehäuseabdeckung einer Dampf- oder Gasturbine oder an einem Absperr- oder Regelventil einer solchen Turbine, Bolzen montiert werden und, während sich die Bolzen under Vorspannung befinden, diese durch Festschrauben von Muttern gesichert werden, dadurch gekennzeichnet, dass zumindestens einer der Bolzen, welcher als Arbeitsbolzen (22) bezeichnet wird, hydraulisch gedehnt und in gedehntem Zustand lagesfixiert wird.

3. Verfahren nach Anspruch 2, gekennzeichnet durch folgende Massnahmen:
a) Auswahl einer Bolzenbohrung zum Anbringen des Arbeitsbolzens (22),
b) Montage des Arbeitsbolzens (22) in der Bolzenbohrung durch Festschrauben und Anziehen des Arbeitsbolzens mittels einer Mutter (32),
c) Montage eines Stützbolzens (21) in einer an einer Seite des Arbeitsbolzens (22) vorhandenen Bohrung und eines anderen Stützbolzens (23) in einer an der anderen Seite des Arbeitsbolzens (22) vorhander Bohrung, und Festschrauben und Anziehen der Stützbolzen (21, 23) mittels Muttern (31, 33), wobei die freien Endflächen der Stützbolzen (21, 23) vorzugsweise im wesentlichen flach ausgebildet sind,
d) Montage eines Brückenelements (41) auf den Stützbolzen (21, 23), wobei das Brückenelement (41) zumindestens eine durchgehende Öffnung hat und mit seiner einen Seite gegen die freien flachen Enden der Stützbolzen (21, 23) anliegt und sich auf diese abstützt, und wobei das Brückenelement (41) in seiner Lage so ausgerichtet wird, dass seine durchgehende Öffnung in eine Position über der Arbeitsbolzen (22) gebracht wird,
e) Einbringen einer Ziehhülse (42) mit einem hydraulischen Zylinder (45) in die Öffnung im Brückenelement (41) und anschrauben der Ziehhülse (42) an der Arbeitsbolzen (22), wobei der hydraulische Zylinder (45) zum Anliegen an das Brückenelement (41) gebracht wird,
f) Aktivierung des hydraulischen Zylinders (45), wobei der hydraulische Zylinder (45) durch über die Ziehhülse (42) ausgeübte Kraftwirkung den Arbeitsbolzen (41) dehnt, bis eine anfänglich festgelegte Dehnung erreicht ist,
g) Fixieren des Arbeitsbolzens (22) in gedehntem Zustand durch Anziehen der Mutter (32), und
f) Deaktivierung des hydraulischen Zylinders (45), Lösen der Ziehhülse (42) vom Bolzen (22) und der Ziehhülse (42) mit dem hydraulischen Zylinder (45) vom Brückenelement (41), sowie Demontage des Brückenelements (41),
wobei die Massnahme c) auch der Massnahme b) vorausgehen kann.

4. Verfahren nach Anspruch 3, dadurch gekennzeichnet, dass bei der Montage des Brückenelements (41) nach d) - Anspruch 3 - auf den Stützbolzen (21, 23) ein oder mehrere Zwischenkörper zwischen dem Brückenelement (41) und einem oder mehreren der Stützbolzen (21, 23) angeordnet werden.

5. Verfahren nach einen der Ansprüche 1 - 4, dadurch gekennzeichnet, dass, falls ein benachbarter Bolzen vorgespannt werden soll, ein und derselbe Bolzen sowohl als Stützbolzen, als auch als Arbeitsbolzen angeornet werden kann, jedoch nicht zur gleichen Zeit.

6. Verfahren nach einem der Ansprüche 1 - 5, dadurch gekennzeichnet, dass ein Bolzen sowohl in vorgespanntem als auch in nicht vorgespanntem Zustand als Stützbolzen verwendet wird.

7. Verfahren nach einem der Ansprüche 3 bis 6, dadurch gekennzeichnet, dass die Änderung der Vorspannung nach f) - Anspruch 3 - überwacht und die Vorspannung eines Bolzens der eingangs angegebenen Art durch hydraulischen Druck geregelt wird.

8. Verfahren nach einem der Ansprüche 1 bis 7, dadurch gekennzeichnet, dass zwei oder mehrere Bolzen an einer Turbinengehäuseabdeckung (1) o.dgl. gleichzeitig gespannt werden, vorzugsweise Bolzen mit einer im Verhältnis zum Mittelpunkt der Gehäuseabdeckung (1) symmetrischen Konfiguration.

9. Vorrichtung dur Durchführung des Verfahrens nach den Ansprüchen 1 - 8, gekennzeichnet, durch ein Brückenelement (41) aus Stahl oder ähnlichem Material, das mit einem oder mehreren darin angebrachten, durchgehenden Öffnungen zu Aufnahme eines oder mehrerer Spannorgane (42, 45) versehen ist, wobei jedes Spannorgan mit einer Ziehhülse (42) und einem hydraulischen Organ (45) zusammenwirkt.

10. Vorrichtung nach Anspruch 9, dadurch gekennzeichnet, dass zwischen dem Brückenelement (41) und einem oder mehreren Stützbolzen (31, 33) Zwischenkörper zur Einstellung der Lage der Symmetrieachse der Ziehhülse (42) angeordnet sind.

11. Vorrichtung nach Anspruch 10, dadurch gekennzeichnet, dass Mittel zur Anzeige des hydraulischen Drucks vorgesehen sind.

12. Vorrichtung nach Anspruch 11, dadurch gekennzeichnet, dass die Mittel zur bezeige des hydraulischen Drucks Regelorgane anfassen, wobei die Regelorgane den hydraulischen Druck so beeinflussen, dass dieser maximal einen vorbestimmten Wert erreichen kann.

13. Vorrichtung nach einem der Ansprüche 9 bis 12, dadurch gekennzeichnet, dass das Brücken element mit zwei oder mehreren durchgehenden Bohrungen zur Anordnung je eines Spannorgans versehen ist, wobei die Abstände zwischen den Mittelpunkten dieser Bohrungen so angeordnet sind, dass diese mit den Abständen zwischen zwei oder mehreren, mit Hilfe des Brückenelements und der am Brückenenelement angeordneten Spannorgane zu spannenden Bolzen übereinstimmen.
